# EUROPÄISCHE PATENTSCHRIFT

(11) **EP 0 611 645 B1**
(45) Veröffentlichungstag und Bekanntmachung des Hinweises auf die Patenterteilung: **05.01.2000**
(21) Anmeldenummer: 94101918.4
(22) Anmeldetag: 08.02.1994
(51) Int. Cl.: B32B 7/06, A44B 18/00, B05D 5/10

(54) **Verbindungselement**
Connection element
Elément de liaison

(30) Priorität: 18.02.1993 DE 9302387 U; 08.03.1993 DE 9303364 U
(43) Veröffentlichungstag der Anmeldung: 24.08.1994
(73) Patentinhaber: AMOENA Medizin-Orthopädie-Technik GmbH, D-83064 Raubling (DE)
(72) Erfinder: Pfeffermann, Rainer, D-83026 Rosenheim (DE)
(74) Vertreter: Gossel, Hans K., Dipl.-Ing.

(56) Entgegenhaltungen:
- DE-A- 1 569 430
- GB-A- 1 545 468
- DATABASE WPI Section Ch, Week 9305 Derwent Publications Ltd., London, GB; Class A14, AN 93-039425 & JP-A-04 363 377 ( PYRAMID KK) , 16.Dezember 1992
- PATENT ABSTRACTS OF JAPAN vol. 016 no. 034 (M-1204) ,28.Januar 1992 & JP-A-03 243399 (DAINIPPON PRINTING CO LTD) 30.Oktober 1991,

## Beschreibung

Die Erfindung betrifft ein Verbindungselement, bestehend aus zwei mit den zu verbindenden Teilen und/oder Körpern verbindbaren Streifen, die nach ihrem Zusammendrücken lösbar aneinander haften.

Verbindungselemente dieser Art sind in Form sogenannter "Klett-Verschlüsse" bekannt.

Aufgabe der Erfindung ist es, ein Verbindungselement der eingangs angegebenen Art zu schaffen, das sich durch eine sehr niedrige Höhe und besondere Weichheit und Flexibilität auszeichnet.

Erfindungsgemäß wird diese Aufgabe bei einem Verbindungselement der gattungsgemäßen Art dadurch gelöst, daß der erste Streifen aus einem Tragband aus flexiblem Material, auf den ein feinkörniges bis pulverförmiges Material aufgeklebt ist, und der andere Streifen aus einem auf eine niedrige Härte eingestellte Material mit elasto-plastischen Eigenschaften besteht. Bei dem erfindungsgemäßen Verbindungselement besteht der erste Streifen aus einem Tragband mit einem aufgeklebten, feinkörnigen Material, so daß dieser etwa den Charakter eines feinkörnigen Schmirgelpapiers hat. Die aufgeklebte Körnung kann unregelmäßig sein und soll eine möglichst große Oberfläche aufweisen. Wird der erste Streifen auf den anderen Streifen aus elasto-plastischem Material aufgedrückt, drückt sich die Körnung in das Material ein, wobei sich die Haftkraft erst nach einigen Sekunden dadurch entwickelt, daß zwischen dem elasto-plastischen Material und den sogenannten "reaktiven Zentren" der Körnung eine chemisch-physikalische Verbindung entsteht.

Nach einer besonders bevorzugten Ausführungsform besteht das feinkörnige bis pulverförmige Material aus Kieselsäure (Aerosil) oder einem Material auf Kieselsäurebasis, während das andere Band vorzugsweise aus einem weich eingestellten Silikon-Kautschuk besteht. Nach einer besonders bevorzugten Ausführungsform ist vorgesehen, daß der weich eingestellte Silikon-Kautschuk zusätzlich Kieselsäure enthält.

Die chemisch-physikalische Verbindung kommt dadurch zustande, daß sich zwischen den Kieselsäure-Molekülen des auf das Tragband aufgebrachten feinkörnigen Materials und dem anderen Band aus Silikon-Kautschuk Wasserstoffbrücken aufbauen.

Besonders vorteilhaft ist eine Kombination, bei der auf das Tragband oder die Trägerfolie hydrophobierte, hochdisperse Kieselsäure aufgebracht wird und das andere Band aus Silikon-Kautschuk besteht, dem hydrophobierte, hochdisperse Kieselsäure zugegeben wurde. Dadurch, daß die Kieselsäure-Moleküle gleichsam offen an der Oberfläche der beiden Bänder liegen und das Band aus additionsvernetzendens Silikon-Kautschuk weich ist, wird die Wirkung der chemisch-physikalischen Verbindung verstärkt.

Ein besonderer Vorteil des verbindungsgemäßen Verbindungselements besteht in seiner äußerst niedrigen Bauhöhe. Das gesamte Verbindungselement kann mit einer Dicke von 0,5 mm hergestellt werden.

Das Trägerband kann aus einem Gewebe oder aus einer Kunststofffolie bestehen. Zweckmäßigerweise ist das Tragband eine PU-Folie.

Das feinkörnige bis pulverförmige Material wird zweckmäßigerweise durch einem Kunststoff-Kleber oder Lack auf das Tragband aufgeklebt.

Das erfindungsgemäße Verbindungselement läßt sich wiederholt lösen und verbinden. Nach dem Lösen des Tragbandes mit dem feinkörnigen Material bildet sich auf dem anderen Streifen eine rauhe Oberfläche die sich nach kurzer Erholungszeit wieder in einer glatten Oberfläche ändert.

Ein Ausführungsbeispiel der Erfindung wird nachstehend anhand der Zeichnung näher erläutert. In dieser zeigt
- Fig. 1: einen Längsschnitt durch die beiden das Verbindungselement bildenden Streifen vor ihrem Zusammendrücken,
- Fig. 2: einen Längsschnitt durch das Verbindungselement in dem miteinander verbundenen Zustand der beiden Streifen und
- Fig. 3: ein Modell dar Wasserstoffbrücken-Bindung zwischen Kieselsäureteilchen.

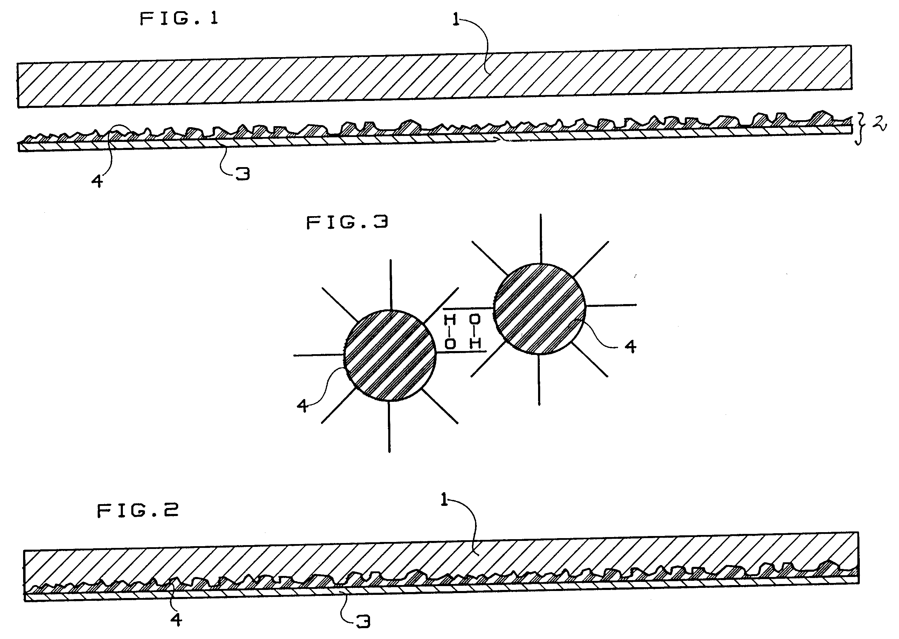

In Fig. 1 ist ein bandförmiger Streifen 1 aus Silikon-Kautschuk dargestellt, dem hydrophobierte, hochdisperse Kieselsäure zugesetzt worden ist. Dieses Band ist durch Aufdrücken mit dem bandförmigen Streifen 2 verbindbar, der aus einem Tragband oder einer Trägerfolie 3 besteht, auf die hydrophobierte, hochdisperse Kieselsäure 4 aufgeklebt ist.

Aus Fig. 2 sind die Bänder 1, 2 in ihrem verbundenen Zustand ersichtlich.

Um als Verbindungselemente zu dienen, werden das Tragband oder die Trägerfolie 2 und der bandförmige Streifen 1 in bekannter Weise mit den miteinander zu verbindenden Teilen oder Oberflächen verbunden.

Sowohl in dem bandförmigen Streifen 1 aus Silikon-Kautschuk, der vorzugsweise mit hydrophobierter, hochdisperser Kieselsäure angereichert worden ist, als auch in der auf das Tragband 2 aufgeklebten Schicht 3 befinden sich Kieselsäure-Moleküle, die beim Zusammendrücken der Bänder Wasserstoffbrücken mit guter Haftkraft bilden. Diese Wasserstoffbrücken-Bindung ist anhand des Modells von Kieselsäure-Molekülen in Fig. 3 dargestellt.

## Patentansprüche

1. Verbindungselement, bestehend aus zwei mit den zu verbindenden Teilen und/oder Körpern verbindbaren Streifen, die nach ihrem Zusammendrücken lösbar aneinander haften,
**dadurch gekennzeichnet**,
daß der erste Streifen aus einem Tragband (2) aus flexiblem Material, auf den ein feinkörniges bis pulverförmiges Material (4) aufgeklebt ist und der andere Streifen (1) aus einem auf eine niedrige Härte eingestellten Material mit elasto-plastischen Eigenschaften besteht.

2. Verbindungselement nach Anspruch 1, dadurch gekennzeichnet, daß der erste Streifen aus einem Tragband aus einem Gewebe oder aus einer Kunststoffolie besteht, auf das oder die das feinkörnige bis pulverförmige Material durch einen Kunststoff-Kleber oder Lack aufgeklebt ist.

3. Verbindungselement nach Anspruch 1 oder 2, dadurch gekennzeichnet, daß das feinkörnige bis pulverförmige Material eine Korn größe von umgefähr 50 µm aufweist.

4. Verbindungselement nach einem der Ansprüche 1 bis 3, dadurch gekennzeichnet, daß das feinkörnige bis pulverförmige Material aus Kieselsäure besteht.

5. Verbindungselement nach Anspruch 4, dadurch gekennzeichnet, daß das feinkörnige Material aus hydrophobierter, hochdisperser Kieselsäure besteht.

6. Verbindungselement nach einem der vorstehenden Ansprüche, dadurch gekennzeichnet, daß der andere Streifen aus einem Silikon-Kautschuk besteht.

7. Verbindungselement nach Anspruch 6, dadurch gekennzeichnet, daß dem Silikon-Kautschuk hydrophobierte, hochdisperse Kieselsäure zugesetzt ist.

8. Verbindungselement nach einem der Ansprüche 6 oder 7, dadurch gekennzeichnet, daß der Silikon-Kautschuk aus einem additionsvernetzenden Silikon-Kautschuk besteht.

## Claims

1. Connection element, comprising two strips which can be connected to the parts and/or elements to be connected and, after pressing together, adhere releasably to each other, characterized in that the first strip comprises a supporting band (2) of flexible material, onto which a fine-grained to powdered material (4) is adhesively bonded, and the other strip (1) consists of a material adjusted to a low hardness and with elasto-plastic properties.

2. Connection element according to Claim 1, characterized in that the first strip comprises a supporting band of a woven fabric or a plastic film, onto which the fine-grained to powdered material is adhesively bonded by a polymer adhesive or lacquer.

3. Connection element according to Claim 1 or 2, characterized in that the fine-grained to powdered material has a grain size of approximately 50 µm.

4. Connection element according to one of Claims 1 to 3, characterized in that the fine-grained to powdered material consists of silicic acid.

5. Connection element according to Claim 4, characterized in that the fine-grained material consists of water-repellent, highly dispersed silicic acid.

6. Connection element according to one of the preceding claims, characterized in that the other strip consists of a silicone rubber.

7. Connection element according to Claim 6, characterized in that water-repellent, highly dispersed silicic acid is added to the silicone rubber.

8. Connection element according to one of Claims 6 or 7, characterized in that the silicone rubber consists of an addition-crosslinking silicone rubber.

## Revendications

1. Elément de liaison, constitué de deux bandes à relier aux parties et/ou corps à railer qui, après leur compression, adhèrent amoviblement l'une à l'autre, caractérisé en ce que la première bande est constituée d'une bande de support (2) en un matériau flexible sur laquelle est collé un matériau (4) à grain fin jusqu'à pulvérulant et que l'autre bande (1) est constituée d'un matériau réglé à une faible dureté ayant des caractéristiques élastoplastiques.

2. Elément de liaison selon la revendication 1, caractérisé en cc que la première bande est constituée d'une bande de support en tissu ou en une feuille de matière synthétique sur laquelle ou lesquelles est collé le matériau à grain fin jusqu'à pulvérulant par une colle de matière synthétique ou vernis.

3. Elément de liaison salon la revendication 1 ou 2, caractérisé en ce que le matériau à grain fin jusqu'à pulvérulant à une grandeur de grain d'environ 50 µm.

4. Elément de liaison salon lune des revendications 1 à 3, caractérisé en ce que le matériau à grain fin jusqu'à pulvérulant est constitué d'acide silicique.

5. Elément de liaison selon la revendication 4, caractérisé en ce que le matériau à grain fin est constitué d'acide silicique rendu hydrophobe, hautement dispersé.

6. Elément de liaison selon l'une des revendications précédentes, caractérisé en ce que l'autre bande est constituée d'un caoutchouc silicone.

7. Elément de liaison salon la revendication 6, caractérisé en ce que de l'acide silicique rendu hydrophobe, hautement dispersé, est ajouté au caoutchouc silicone.

8. Elément de liaison selon l'une des revendications 6 on 7, caractérisé en ce que le caoutchouc silicone est constitué d'un caoutchouc silicone à réticulation par addition.
